# EUROPEAN PATENT APPLICATION

(11) **EP 4 769 139 A1**
(43) Date of publication of application: **01.07.2026**
(21) Application number: 25217778.7
(22) Date of filing: 21.11.2025
(51) Int. Cl.: G06F 9/455

(54) **LEGACY VIRTUAL MACHINE TO CONFIDENTIAL VIRTUAL MACHINE CONVERSION**

(30) Priority: 26.12.2024 US 202419001751
(71) Applicant: INTEL Corporation, Santa Clara, CA 95054 (US)
(72) Inventor: MEHTA, Kunal, Portland, OR, 97229 (US); VIBHUTE, Tejaswini, Tigard, OR, 97223 (US); DURHAM, David M., Beaverton, OR, 97007 (US)
(74) Representative: Rummler, Felix

(57) **Abstract**

A legacy virtual machine (a virtual machine not operating in a secure environment) can be converted to a confidential virtual machine (a virtual that operates in a secure environment) on the fly, with little downtime experienced by the legacy virtual machine (VM) owner. A legacy VM operating either on a legacy platform (a platform not having confidential computing capabilities) or a confidential computing-capable platform can be converted to a confidential VM (CVM). The legacy VM can be migrated to another computing device as part of the conversion or be converted into a CVM that executes on the same computing device on which the legacy VM was running. A trusted security module can be responsible for starting a VM-to-CVM conversion session, validating the state of legacy virtual machine to be converted, provision a CVM with the state of the legacy virtual machine, and end a VM-to-CVM conversion session.

## Description

### BACKGROUND

A confidential virtual machine is a virtual machine that operates within a secure environment that protects data and workloads from unauthorized access or tampering. A confidential virtual machine can be protected from tampering by other virtual machines and privileged system components, such as the hypervisor and operating system. The secure environments that protect confidential virtual machines can be enabled by hardware-based encryption and isolation mechanisms.

### BRIEF DESCRIPTION OF THE DRAWINGS

FIG. 1 illustrates an example system capable of converting legacy virtual machines to confidential virtual machines.
FIGS. 2A-2B illustrate a first example method of converting a legacy virtual machine to a confidential virtual machine.
FIGS. 3A-3B illustrate a second example method of converting a legacy virtual machine to a confidential virtual machine.
FIG. 4 illustrates a third example method of converting a legacy virtual machine to a confidential virtual machine.
FIG. 5 illustrates a fourth example method of converting a legacy virtual machine to a confidential virtual machine.
FIG. 6 is a block diagram of an example computing system in which technologies described herein may be implemented.
FIG. 7 is a block diagram of an example processor unit to execute computer-executable instructions as part of implementing technologies described herein.

### DETAILED DESCRIPTION

Cloud service provider (CSP) customers that run legacy virtual machines (virtual machines that are not operating in a secure environment) on CSP computing platforms may desire, at some point, to convert their legacy virtual machines into confidential virtual machines (virtual machines that operate in a secure environment). CSP customers may wish to make legacy virtual machine-to-confidential virtual machine (CVM) conversions because they may want to run a trusted workload or secret data on the virtual machine, or simply because they wish to run the legacy virtual machine (VM) in a more secure environment. Currently, to make a legacy VM-to-CVM, a virtual machine owner typically needs to build a new virtual machine image for the CVM based on the legacy VM, provision the CVM on a computing device having confidential computing capabilities, and then launch the CVM from a starting state. This causes downtime and resource expenditure for existing CSP customers and creates on-boarding costs for new CSP customers who wish to convert their existing legacy VMs into CVMs to take advantage of a CSP's confidential computing capabilities.

Described herein are technologies that provide for the live migration of legacy virtual machines to confidential virtual machines that execute on hardware-supported confidential computing-capable computing devices. The migration can involve converting a legacy virtual machine running on a first computing device to a CVM that operates on a second computing device or converting a legacy virtual machine running on a computing device to a CVM that executes on the same computing device. The legacy VM-to-CVM conversion has at least the advantages of being an on-the-fly conversion (that is, a conversion that suffers minimal downtime by avoiding having to create a new CVM image, provision the CVM, and launch the CVM from a starting state), the CVM being able to begin execution where the legacy left off, and preserving legacy VM data. By being able to provide near real-time conversions of legacy virtual machines to confidential virtual machines at a low transactional cost, a CSP having a computing infrastructure predominantly or entirely comprising confidential computing-capable computing systems can convert running legacy VMs to CVMs to give them more flexibility in how to deploy virtual machines within their computing infrastructure.

In accordance with the technologies disclosed herein, an executing legacy VM is converted to a CVM by capturing a state of a running (or hibernating) legacy VM, encrypting the legacy VM state, securely transferring the legacy VM state to the virtual machine monitor of the computing system that will be hosting the CVM, having a trusted security module (TSM) decrypt and validate the state, having the TSM provision the CVM with the state of the legacy VM, and having the virtual machine monitor start the CVM. The technologies disclosed herein provide a general mechanism for converting a legacy VM to a CVM and can be adapted to relevant existing confidential computing architectures. The technologies disclosed herein further allow for the bulk migration of legacy VMs to CVMs.

As used herein, the term "confidential computing" refers to a computing paradigm in which the execution of instructions and the processing of data are performed in a way that keeps the instructions and data secure. This is achieved by isolating computations in a secure environment that ensures that data and code are protected from unauthorized access or tampering, even from privileged system components operating on the same computing system as the secure environment, and storing the instructions and data in encrypted form. For example, a virtual machine operating in a confidential computing-enabled secure environment can be protected from the hypervisor and the host operating system. A virtual machine operating in a confidential computing-enabled secure environment deployed in a cloud service provider infrastructure can also be protected from cloud service provider software.

The term "hardware-supported confidential computing" refers to confidential computing implementations in which processors or other hardware components have capabilities dedicated to providing one or more aspects of confidential computing (such as hardware-enforced virtual machine isolation and hardware memory encryption engines) or hardware implemented in a manner to provide one or more aspects of confidential computing. For example, processors may support instructions pertaining to the initialization and management of confidential virtual machines, comprise logic (either dedicated logic or programmable logic that executes confidential computing-dedicated firmware) that supports the isolation and protection of confidential virtual machines, and/or cryptographic accelerators that perform in-line encryption and decryption of data and instructions belonging to a secure environment. In an example of processor-enabled isolation, a processor may limit access to a protected range of memory to instructions stored within the protected memory range and prevent all other software accesses or direct-memory access (DMA) from I/O devices to the protected memory range. Some examples of hardware-supported confidential computing architectures include Intel^{®} Trust Domain Extensions (TDX), AMD Secure Encrypted Virtualization-Secure Nested Paging (SEV-SNP), Arm Confidential Compute Architecture (CCA) - Realm Management Extension (RME), RISC-V Confidential Virtual Machine Extension (CoVE), and RISC-V Assured Confidential Execution (ACE).

As used herein, the term "confidential virtual machine" refers to a virtual machine operating in a secure environment on a computing system having hardware-supported confidential computing capabilities that are utilized to enable the secure environment, an environment in which instructions and data are encrypted, and the confidential virtual machine is isolated from other software (or firmware) entities. As used herein, the term "legacy virtual machine" refers to a virtual machine that does not operate in a secure environment. A legacy virtual machine may operate on a computing system that does or does not comprise hardware-supported confidential computing capabilities.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or in any other manner.

As used herein, the term "coupled" may indicate elements cooperate or interact with each other, but they may or may not be in direct physical or electrical contact. The terms "comprising," "including," "having," and the like, as used with respect to embodiments of the present disclosure, are synonymous.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the software or firmware instructions are not actively being executed by the system, device, platform, or resource.

Reference is now made to the drawings, which are not necessarily drawn to scale, wherein similar or same numbers may be used to designate same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives within the scope of the claims.

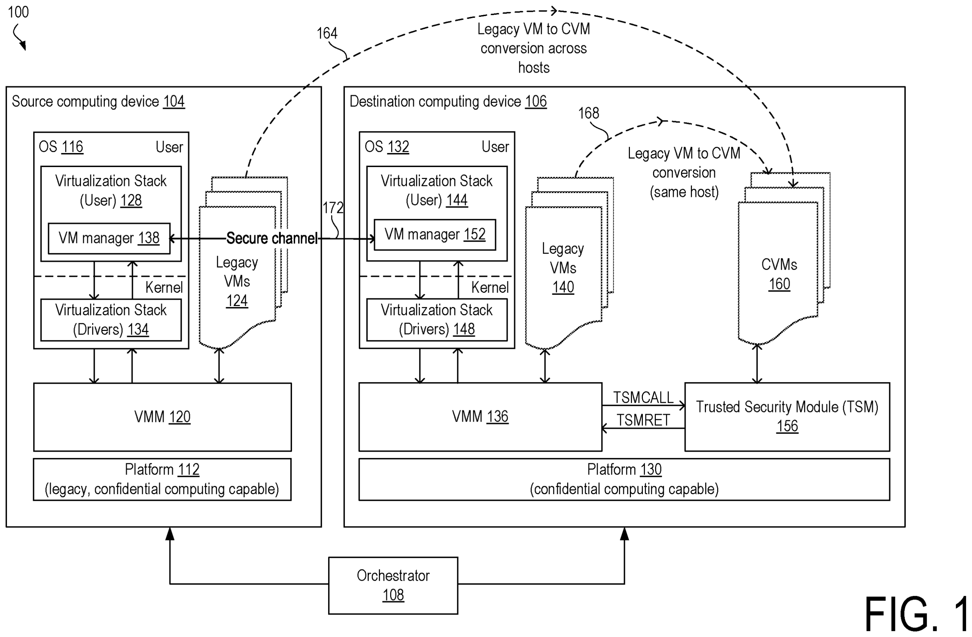

FIG. 1 illustrates an example system capable of converting legacy virtual machines to confidential virtual machines. The system 100 comprises a source computing device 104, a destination computing device 106, and an orchestrator 108. In some embodiments, the system 100 can be part of a data center. The orchestrator 108 can be a virtual machine orchestrator (e.g., OpenStack, VMware vSphere, Kubernetes) that performs virtual machine management functions (e.g., provisioning, lifecycle management) for a fleet of computing devices that the source computing device 104 and the destination computing device 106 are a part of. The source computing device 104 and the destination computing device 106 can be any computing device or computing system described or referenced herein.

The computing device 104 comprises a platform 112 upon which an operating system 116 operates. A virtual machine monitor 120 (or hypervisor) operates (e.g., Windows Hyper-V, Linx KVM) on the operating system 116 and hosts legacy virtual machines 124. The operating system 116 comprises a virtualization stack that includes a user-space virtualization stack component 128 and kernel-space component 134. The user-space virtualization stack component 128 comprises a virtual machine manager 138.

The platform 112 comprises one or more processors (such as CPUs (central processing units)) and can include additional computing device components such as memories, storage units, I/O (input/output) controllers, and other computing device resources or components described or referenced herein. Components of the platform 112 can be virtualized by the virtual machine monitor 120 working in coordination with the operating system 116 for use by the legacy virtual machines 124. The platform 112 may be a confidential computing-capable platform or a legacy platform (one that is not confidential computing-capable). Regardless of the capabilities of the platform 112, the legacy virtual machines 124 are legacy virtual machines in that they do not operate in a confidential computing-enable secure environment.

The destination computing device 106 comprises a platform 130 upon which an operating system 132 operates. A virtual machine monitor 136 operates on the operating system 132 and hosts legacy virtual machines 140. The operating system 116 comprises a virtualization stack that includes a user-space virtualization stack component 144 and a kernel-space virtualization stack component 148. The user-space virtualization stack component 144 comprises a virtual machine manager 152. The operating system 132, virtual machine monitor 136, legacy virtual machines 140, and virtualization stack components are similar to their counterpart components in source computing device 104. The platform 130 is similar to platform 112 except that the platform 130 is confidential computing-capable. That is, the platform 130 comprises one or more hardware components that have confidential computing capabilities (e.g., processors that support instructions for initializing and managing confidential virtual machines or comprise logic that support the isolation and protection of confidential virtual machines.

The destination computing device 106 further comprises a trusted security module 156 (TSM). The virtual machine monitor 136 interacts with the trusted security module 156 to initialize, provision, manage, and tear down confidential virtual machines. In some embodiments, the trusted security module 156 operates in a privileged mode (e.g., Secure-Arbitration Mode (SEAM) for processors supporting Intel^{®} TDX technology, Realm mode (Realm world) in Arm Confidential Computing Architecture) and the virtual machine monitor 136 is only able to access the trusted security module 156 when the processor is in the privileged mode. The virtual machine monitor 136 and the trusted security module 156 can communicate via an application binary interface (ABI), a mailbox command-like protocol mechanism (whereby the virtual machine monitor 136 and trusted security module 156 communicate asynchronously via a shared buffer), or other suitable interface.

The trusted security module 156 can begin a legacy virtual machine to confidential virtual machine conversion session, validate a legacy virtual machine state, import the legacy virtual machine state into a confidential virtual machine, and end a legacy virtual machine to confidential virtual machine conversion session. In some embodiments, the trusted security module comprises extensions to existing software and/or firmware confidential computing architecture modules (such as the TDX-Module in Intel^{®} TDX technology (which is implemented as processor microcode), AMD-Secure Processor (SP) firmware in AMD-SEV SNP, and the Realm Machine Monitor in Arm CCA technologies). In some embodiments, extensions to existing trusted security modules to enable these capabilities can comprise exposing new trusted security module ABIs (e.g., new SEAMCALLs in the case of Intel^{®} TDX) to a virtual machine monitor.

The dashed lines in FIG. 1 illustrate the conversion of legacy virtual machines 124 running on the source computing device 104 and legacy virtual machines 140 running on the destination computing device 106 to confidential virtual machines 160 running on the destination computing device 106. Dashed line 164 illustrates the live conversion of a legacy virtual machine to a confidential virtual machine from one computing device to another and dashed line 168 illustrates the live conversion of a legacy virtual machine to a confidential virtual machine within the same computing device.

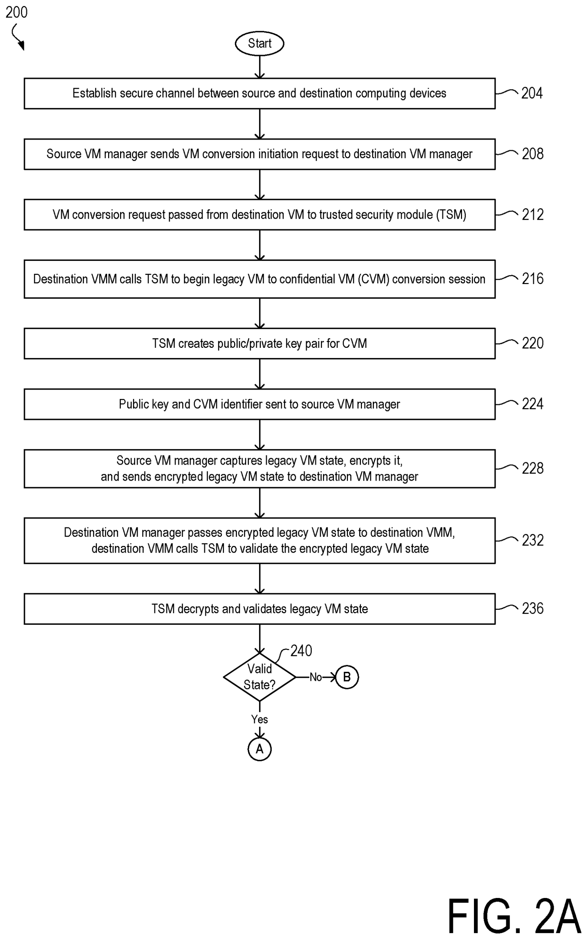

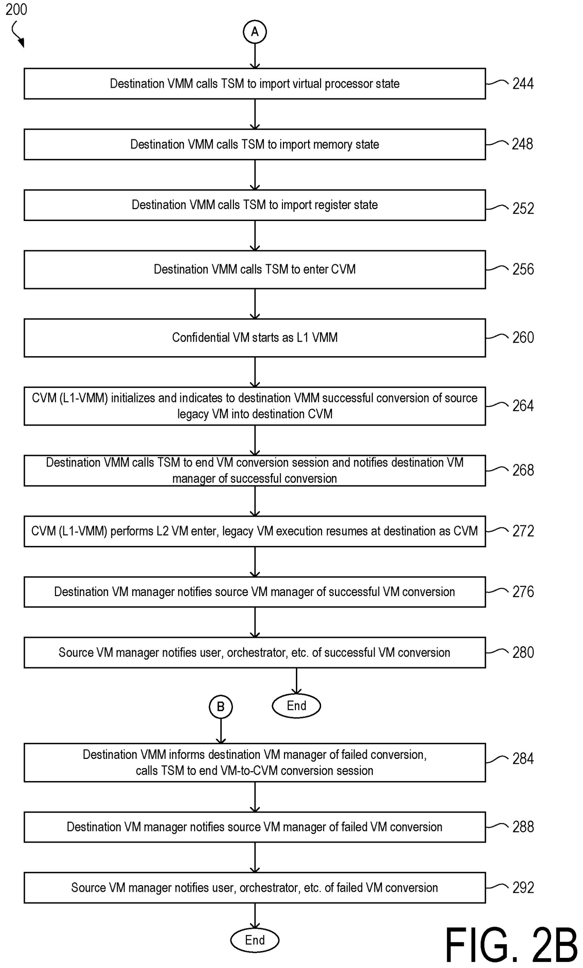

FIGS. 2A-2B illustrate a first example method of converting a legacy virtual machine to a confidential virtual machine. The method 200 illustrates an example method for converting a legacy virtual machine executing on a first computing device to a confidential virtual machine executing on a second computing device that begins execution where the legacy virtual machine left off. The method 200 is described in the context of converting one of the legacy virtual machines 124 from the source computing device 104 to a confidential virtual machine executing on the destination computing device 106.

At stage 204, the secure channel 172 in FIG. 1 is established between the source computing device 104 and the destination computing device 106. In some embodiments, the secure channel 172 is established between the virtual machine manager 138 of the source computing device 104 and the virtual machine manager 152 of the destination computing device 106. The secure channel 172 can comprise a channel that comports with the transport layer security (TLS) protocol, be created by Intel^{®} SGX enclaves established at the source and destination computing devices, or be any other suitable type of secure channel.

At stage 208, the virtual machine manager 138 of the source computing device 104 sends a request to the virtual machine manager 152 of the destination computing device 106 to initiate a virtual machine to confidential virtual machine conversion. At stage 212, the virtual machine manager 152 of destination computing device 106 passes the virtual machine conversion request to the trusted security module 156 via the kernel-space virtualization stack component 148 and the virtual machine monitor 136. At stage 216, the virtual machine monitor 136 prepares for a new confidential virtual machine to be started and calls the trusted security module 156 to begin a legacy virtual machine to confidential virtual machine conversion session.

At stage 220, the trusted security module 156 creates a public-private key pair and unique CVM identifier and associates the key pair with the confidential virtual machine to be created. Associations between key pairs and confidential virtual machines can be stored in a look-up table or other appropriate data structure indexed by a confidential virtual machine identifier. In some embodiments, multiple legacy virtual machine to confidential virtual machine conversion sessions can occur simultaneously and the look-up table allows for the tracking of which key pair is associated with which confidential virtual machine. In embodiments where the confidential virtual machine is an Intel^{®} TRX Trusted Domain (TD), the confidential virtual machine identifier can be the physical memory page address of the TD Root (TDR) page.

At stage 224, the virtual machine monitor 136 of the destination computing device 106 receives the public key from the trusted security module 156 and sends it to the virtual machine manager 152. The virtual machine manager 152 of the destination computing device 106 sends the public key and the confidential virtual machine identifier to the virtual machine manager 138 of the source computing device 104 over the secure channel 172.

At stage 228, the virtual machine manager 138 of the source computing device 104 begins a legacy virtual machine migration flow, which can be an existing flow that manages legacy virtual machine migration from one computing device to another. The virtual machine manager 138 captures the state of the legacy virtual machine, encrypts it, and sends the encrypted virtual machine state to the virtual machine manager 152 of the destination computing device 106 over the secure channel 172.

The state of any virtual machine described or referenced herein can comprise a state of a virtual processor of the virtual machine (e.g., control registers, instructor pointers, general-purpose register (GPRs) belonging to the virtual processor), a state of registers not belonging to the virtual processor (e.g., other general-purpose registers), and a memory state (e.g., the state of one or more memory pages utilized by the virtual machine). In some embodiments, the virtual machine state can comprise an input/output (I/O) state (e.g., the state of virtual devices, such as network interface controllers) and/or a storage state (e.g., the state of one or more virtual disks attached to a virtual machine, which can include virtual disk images).

A virtual machine state can further comprise a state of a virtual machine monitor that reflects the state of registers or other data structures utilized by the virtual machine monitor to control virtual machine operation, such as information indicating how VM exit commands, VM entry commands, and interrupts are to be handled. In embodiments where a virtual machine is enabled by Intel^{®} VT-x virtualization technology (Intel^{®} Virtual Technology (VT) for x86-based processors), the state of a virtual machine can comprise the state of a Virtual Machine Control Structure (VMCS). In embodiments where a virtual machine is enabled by certain AMD virtualization technologies, the state of a virtual machine can comprise a state of a Virtual Machine Control Block (VMCB).

At stage 232, the virtual machine manager 152 of the destination computing device 106 passes the encrypted state of the legacy virtual machine received over the secure channel 172 to the virtual machine monitor 136 via the kernel-space virtualization stack component 148. The virtual machine monitor 136 then calls the trusted security module 156 to validate the legacy virtual machine state.

At stage 236, the trusted security module 156 decrypts the encrypted legacy virtual machine state with the private key of the public-private key pair associated with the unique identifier of the confidential virtual machine to be established. The trusted security module 156 then validates the portions of the legacy virtual machine state (e.g., virtual processor state, register states, memory state) and returns the status of the validation operation to the virtual machine monitor 136.

In some embodiments, virtual machine state validation can comprise the destination computing device attesting a signed integrity report (or attestation report) sent to the destination computing device from the source computing device as part of the virtual machine state. The signature of the integrity report can be an encrypted integrity check value that indicates an expected value based on program code and/or data (e.g., a hash of a portion of program code). The signature can be provided by the owner of the virtual machine (e.g., a cloud service provider customer) or another entity trusted by the owner of the virtual machine. The integrity check value could be provided to the source computing device as part of a virtual machine image or generated by the source computing device upon receipt of a virtual machine image. The signature can be encrypted with the private key of a public-private key associated with the virtual machine. The trusted security module can attest the signature using the public key of the key pair associated with the signature (which the trusted security module may obtain from the virtual machine owner) to decrypt the signature and comparing the resulting decrypted integrity check value included in the signature against an integrity check value determined by the destination computing device from the decrypted legacy virtual machine state. A successful validation of the legacy virtual machine comprises decryption of the legacy virtual machine state and attestation of the integrity report.

This run-time attestation allows the state of a running (or hibernating) legacy virtual machine to be measured such that an initial security profile of the legacy virtual machine running on the source computing device can be re-established at the destination computing device as the legacy virtual machine is migrated to a trusted execution environment. This approach allows the destination computing device to confirm that a received legacy virtual machine state is authentic and that the legacy virtual machine state has not been modified during transit from the source computing device to the destination computing device. In some embodiments, validation of legacy virtual machine states can be based on information disclosed in U.S. Patent No. 7,953,980, issued on May 31, 2011, and titled "Signed manifest for run-time verification of software program identity and integrity".

At stage 240, if the trusted security module 156 successfully validates the received legacy virtual machine state, the method 200 proceeds to stage 244. If not, the method 200 proceeds to stage 284.

At stage 244, the virtual machine monitor 136 of the destination computing device 106 calls the trusted security module 156 to import a virtual processor state of the legacy virtual machine state to a confidential virtual machine. Importing a virtual processor state of the legacy virtual machine to a confidential virtual machine can be referred to as provisioning the confidential virtual machine with the virtual processor state. In embodiments where the legacy virtual machine and the confidential virtual machines are enabled by Intel^{®} TDX technologies, importing a legacy virtual processor state to a confidential virtual machine can comprise provisioning a state of an Intel^{®} VMCS to a confidential virtual machine.

The method 200 illustrates migrating a legacy virtual machine from a source computing device 104 to a confidential virtual machine 160 operating on the destination computing device 106 operating as a partitioned L2 virtual machine. Thus, part of provisioning the confidential virtual machine on the destination computing device 106 is to provision a level 1 (L1) confidential virtual machine and then provision a partitioned L2 confidential virtual machine that operates on the L1 confidential virtual machine. In other embodiments, a confidential virtual machine can be provisioned as a level 1 (L1) virtual machine.

At stage 248, the virtual machine monitor 136 calls the trusted security module 156 to import a memory state of the legacy virtual machine state. Importing a memory state of the legacy virtual machine to a confidential virtual machine can be referred to as provisioning the confidential virtual machine with the memory state. Private memory managed by the trusted security module and dedicated to the confidential virtual machine is populated with the memory state of the legacy virtual machine. As discussed above, the contents of this memory will be encrypted and not accessible to any other software and/or firmware entity (e.g., other virtual machines, the hypervisor, operating system) operating on the destination computing device 106.

In some embodiments, the trusted security module can employ technologies disclosed in U.S. Patent No. 7,571,298 ("the '298 patent"), issued on Aug. 4, 2009, and titled, "Systems and methods for host virtual memory reconstitution" to import a memory state of the legacy virtual machine. Briefly, the '298 patent discloses technologies that facilitate the reconstitution of host virtual memory by employing mechanisms that handle memory translation and access. This includes the use of page tables and memory management units to translate virtual addresses to physical addresses, ensuring that memory references are accurately resolved during the reconstitution process.

At stage 252, the virtual machine monitor 136 of the destination computing device 106 calls the trusted security module 156 to import a register state of the legacy virtual machine state (register states that are not part of the virtual processor state). Importing register states of the legacy virtual machine to a confidential virtual machine can be referred to as provisioning the confidential virtual machine with the register states.

Stages 244, 248, and 252 are part of provisioning a confidential virtual machine with a legacy virtual machine state. In some embodiments, the method 200 can comprise the virtual machine monitor 136 calling the trusted security module 156 to import additional portions of a legacy virtual machine state, such as a storage state or an input/output state. The stages 244, 248, and 252 pertaining to importing a legacy virtual machine state to a confidential virtual machine state (as well as stages 220 and 224 pertaining to validation of a legacy virtual machine state) can also be called multiple times as part of migrating a batch of legacy virtual machines from a source computing device to a destination computing device simultaneously. For example, if multiple legacy virtual machines are to be provisioned as partitioned L2 confidential virtual machines, the stages 244, 248, and 252 can be called multiple times while multiple legacy VM to confidential VM conversions sessions are active to provision the L2 confidential virtual machines with the states of the legacy virtual machines.

At stage 256, the virtual machine monitor 136 calls the trusted security module to enter the confidential virtual machine as a L1 VMM. At stage 260, the confidential virtual machine starts executing on the destination computing device 106. This can comprise the confidential virtual machine executing instructions stored in private memory at a memory address stored in an L1-VMM reset vector. At stage 264, the confidential virtual machine initializes itself and indicates a successful legacy virtual machine to confidential virtual machine conversion to the virtual machine monitor 136. At stage 268, the virtual machine monitor 136 calls the trusted security module 156 to end the virtual machine conversion session. Ending the virtual machine conversion session can comprise the trusted security module 156 deallocating the public-private key pair associated with the conversion session and removing the public-private key pair-confidential virtual machine association stored in the look-up table. After ending the conversion session, the virtual machine monitor 136 notifies the virtual machine manager 138 of a successful legacy virtual machine to confidential virtual machine conversion.

At stage 272, the now-executing confidential virtual machine performs a VM enter operation to cause the provisioned L2 virtual machine to begin executing where the legacy virtual machine left off. At stage 276, the virtual machine manager 152 of the destination computing device 106 notifies the virtual machine manager 138 of the source computing device 104 that the conversion has completed. At stage 280, the virtual machine manager 138 of the source computing device 104 marks the conversion as completed and sends notification of the successful conversion to a user of the source computing device 104, the orchestrator 108, or other entity (e.g., such as an entity that caused the legacy virtual machine conversion to be initiated, or an entity that is to be informed of successful virtual machine conversions). The method 200 ends upon completion of stage 280.

Returning to the branch that the method 200 takes if validation of the legacy virtual machine state fails at stage 240, at stage 284, the virtual machine monitor 136 notifies the virtual machine manager 152 of the legacy virtual machine conversion failure and calls the trusted security module 156 to end the confidential virtual machine conversation session. At stage 288, the virtual machine manager 152 receives notification of the conversion failure and sends notification of the conversion failure to the virtual machine manager 138 of the source computing device 104. At stage 292, the virtual machine manager 138 marks the conversion as having failed and sends a notification of the conversion failure to a user of the source computing device 104, the orchestrator 108, or other entity (e.g., such as an entity that caused the legacy virtual machine conversion to be initiated, or an entity that is to be informed of virtual machine conversion failures). The method 200 ends upon completion of stage 292.

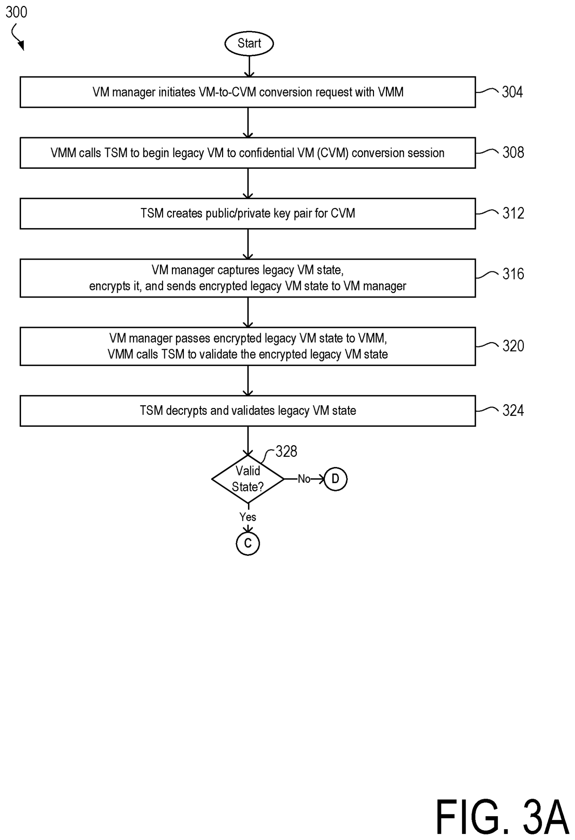

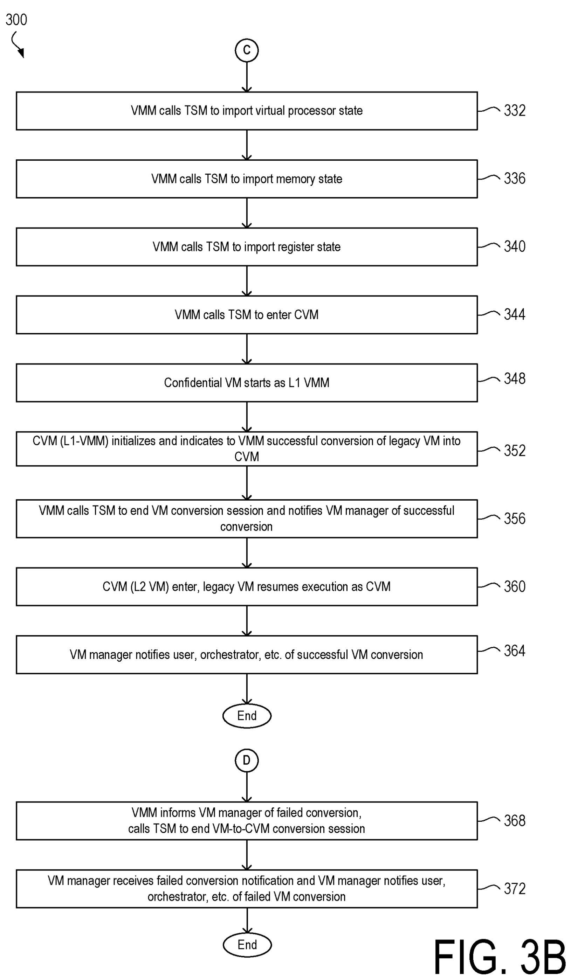

FIGS. 3A-3B illustrate a second example method of converting a legacy virtual machine to a confidential virtual machine. The method 300 illustrates an example method for converting a legacy virtual machine to a confidential virtual machine on the same computing device. This can be referred to as "self-conversion" of a legacy virtual machine. The method 300 is described in the context of converting one of the legacy virtual machines 140 from the destination computing device 106 into a confidential virtual machine 160 executing on the destination computing device 106.

At stage 304, the virtual machine manager 152 of the destination computing device 106 initiates a legacy virtual machine to confidential virtual machine conversion with the virtual machine monitor 136. At stage 308, the virtual machine monitor 136 prepares for a new confidential virtual machine to be started and calls the trusted security module to begin a legacy virtual machine to confidential virtual machine conversion session.

At stage 312, the trusted security module creates a public-private key pair and unique CVM identifier and associates the key pair with the confidential virtual machine to be created. Associations between public-private key pairs and confidential virtual machines can be stored in any appropriate data structure indexable by confidential virtual machine identifier. As discussed above, multiple legacy virtual machine to confidential virtual machine conversion sessions can be active simultaneously and the data structure storing public-private key pair to confidential virtual machine associations allows for the tracking of which public-private key pair is associated with which confidential virtual machine.

At stage 316, the virtual machine manager 152 begins the virtual machine to confidential virtual machine migration flow. The virtual machine manager 152 captures the state of the legacy virtual machine, encrypts it, and sends the encrypted legacy virtual machine state to the virtual machine manager 152. At stage 320, the virtual machine manager 152 passes the encrypted legacy virtual machine state to the virtual machine monitor 136 via the kernel-space virtualization stack component 148, and the virtual machine monitor 136 calls the trusted security module 156 to validate the legacy virtual machine state.

At stage 324, the trusted security module 156 decrypts the encrypted legacy virtual machine state with the private key associated with the unique identifier of the confidential virtual machine to be established, validates the portions of the legacy virtual machine state (e.g., virtual processor state, register states, memory state), and returns the status of the validation operation to the virtual machine monitor 136.

At stage 328, if the trusted security module 156 successfully validates the received legacy virtual machine state, the method 300 proceeds to stage 332. If not, the method 300 proceeds to stage 368. At stage 332, the virtual machine monitor 136 calls the trusted security module 156 to import a virtual processor state of the legacy virtual machine state to the confidential virtual machine. The trusted security module 156 can import the virtual processor state by provisioning the confidential virtual machine with the virtual processor state.

The method 300 illustrates migrating a legacy virtual machine from a destination computing device 106 to a confidential virtual machine operating on the destination computing device 106 as a partitioned L2 virtual machine. Thus, as in method 200, part of provisioning the confidential virtual machine on the destination computing device 106 is to provision a level 1 (L1) confidential virtual machine and then provision a partitioned L2 confidential virtual machine that operates on the L1 confidential virtual machine. As mentioned above, in other embodiments of self-conversion of a legacy virtual machine, a confidential virtual machine can be provisioned as a level 1 (L1).

At stages 336 and 340, the virtual machine monitor 136 calls the trusted security module 156 to import a memory state and a register state, respectively, of the legacy virtual machine state.

Stages 332, 336, and 340 are part of provisioning a confidential virtual machine with a legacy virtual machine state. In some embodiments, the method 300 can comprise the virtual machine monitor 136 calling the trusted security module 156 to import additional portions of a legacy virtual machine state, such as a storage state or an I/O state. Stages 344, 348, and 352 can also be called multiple times as part of migrating a batch of legacy virtual machines from a source computing device to a destination computing device simultaneously.

At stage 344, the virtual machine monitor 136 calls the trusted security module to enter the confidential virtual machine. At stage 348, the confidential virtual machine starts executing on the destination computing device 106. This can comprise the confidential virtual machine executing instructions stored in private memory beginning at a memory address stored in an L1-VMM reset vector. At stage 352, the confidential virtual machine (acting as an L1 VMM) initializes itself and indicates a successful legacy virtual machine to confidential virtual machine conversion to the virtual machine monitor 136.

At stage 356, the virtual machine monitor 136 calls the trusted security module 156 to end the virtual machine conversion session. Ending the virtual machine conversion session can comprise deallocating the public-private key pair associated with the conversion session, and removing the public-private key pair-confidential virtual machine association stored in the data structure storing key pair-CVM associations. After ending the conversion session, the virtual machine monitor 136 notifies the virtual machine manager 152 of a successful legacy virtual machine to confidential virtual machine conversion.

At stage 360, the now-executing confidential virtual machine performs a VM enter operation to cause the provisioned L2 virtual machine to begin executing where the legacy virtual machine left off. At stage 364, the virtual machine manager 152 marks the conversion as completed and sends a notification of the successful conversion to a user of the source computing device 104, the orchestrator 108, or another entity. The method 300 ends upon completion of stage 364.

Returning to the branch that the method 300 takes if validation of the legacy virtual machine state fails at stage 328, at stage 368, the virtual machine monitor 136 notifies the virtual machine manager 152 of the legacy virtual machine conversion failure and calls the trusted security module 156 to end the confidential virtual machine conversation session. At stage 372, the virtual machine manager 152 receives notification of the conversion failure and sends a notification of the conversion failure to a user of the destination computing device 106, the orchestrator 108, or another entity. The method 300 ends upon completion of stage 372.

As mentioned above, the trusted security module is capable of starting a legacy virtual machine to confidential virtual machine conversion session, validating a legacy virtual machine state, importing the legacy virtual machine state to the confidential virtual machine, and ending a legacy virtual machine to confidential virtual machine conversion session. Below is a set of example calls that can be made to a trusted security module that supports these virtual machine conversion functions.

The below calls can be made from an Intel^{®} TDX-enabled processor operating in a SEAM mode (the calls are thus SEAMCALLS) to an Intel^{®} TDX module, and appropriate modifications to the example calls can be made for implementations in other types of existing trusted security modules (e.g., AMD SEV-SVP firmware). The below calls and their return information are represented by the TSMCALL and TSMRET arrows illustrated in FIG. 1 between the virtual machine monitor 136 and the trusted security module 156. In some embodiments, a trusted security module can support calls in addition to those listed in the set of example calls below, such as calls that import a storage state or an input/output state. In other embodiments, two or more of the example calls in the set of example calls listed below can be merged into one call, such as a call that imports multiple portions of a virtual machine state (e.g., a call that imports register states and a memory state, a call that imports all portions of a virtual machine state). The number of trusted security module calls implementing support for a legacy virtual machine state to confidential virtual machine conversion can be based on the interruptibility of the various conversion operations (conversion session initiation, virtual machine state validation and importation, ending conversion session) and the time involved to perform these operations. The trusted security module calls are designed to be exposed to the virtual machine monitor in such a way that the virtual machine monitor cannot use them to in inject malicious state information into the state of an executing virtual machine being converted to a confidential virtual machine.

In other embodiments, a set of trusted security module calls that support virtual machine conversion is a variation of the set of example calls listed below. These variations can vary in the call name, operand name, input operand bit assignments, and in other ways, while still allowing the trusted security module to be called to perform the virtual machine conversion operations of initiating a virtual machine conversion session, validating a virtual machine state, importing a virtual machine state into a confidential virtual machine, and ending a virtual machine conversion session.

The example set of trusted security module calls (TSMCALLs) comprises TSM.CONV.BEGIN, TSM.CONV.VALIDATE, TSM.CONV.VMCS.IMPORT, TSM.CONV.MEM.IMPORT, TSM.CONV.REG.IMPORT, and TSM.CONV.END calls. The "leaf" and "version" numbers are provided in the context of SEAMCALLs, which are part of the Intel^{®} TDX architecture. Leaf numbers and version numbers are identifiers used to specify and manage different SEAMCALL functions and their supported versions.

The TSM.CONV.BEGIN call defines an application binary interface (ABI) for instructing a trusted security module to establish a virtual machine to confidential virtual machine conversion session within the trusted security module, generating a unique CVM identifier, and generating a public-private key pair, (which can be an RSA key pair) to be used for encrypting the virtual machine state being converted during transit of the virtual machine state. Encrypting the virtual machine state being converted during transit of the virtual machine state from another computing device or from a virtual machine manager operating on the same computing device that will host the confidential virtual machine helps provide integrity protection for the conversion process. The public-private key pair associated with a confidential virtual machine can be stored in a look-up table or other suitable data structure indexable by confidential virtual machine identifier. The confidential virtual machine identifier can be a memory page, such as the TD (Trusted Domain) root (TDR) memory page address in Intel^{®} TDX-supported confidential virtual machines. The trusted security module stores the public key of the generated private-public key at an address supplied as part of the TSM.CONV.BEGIN call. Tables 1-3 list the input and output operands and the completion status codes for the example TSM.CONV.BEGIN call. The "Reg1", "Reg2" ... "Reg n" input operand names in the example set of trusted security module calls signify that operand values can passed to/from the trusted security module via registers. Operand values could be passed to/from a trusted security module via other data structures.

**Table 1. TSM.CONV.BEGIN - Input Operands**

| **Operand** | **Description** | | |
|---|---|---|---|
| Reg1 | TSM.CONV.BEGIN leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | CVM identifier | | |
| Reg3 | Host physical memory address to store the public key | | |

**Table 2. TSM.CONV.BEGIN - Output Operand**

| **Operand** | **Description** |
|---|---|
| Reg1 | TSM.CONV.BEGIN return code |

**Table 3. TSM.CONV.BEGIN - Completion status codes**

| **Code** | **Description** |
|---|---|
| OPERAND_INVALID | TSMCALL operand(s) invalid |
| OPERAND_BUSY | TSMCALL function indicated by leaf/version numbers is in progress |

The TSM.CONV.VALIDATE call defines an ABI for instructing a trusted security module to validate a portion of a virtual machine state that is to be imported into a confidential virtual machine. The trusted security module is supplied with the starting and ending memory page addresses of the portion of the virtual machine state to be validated. The starting and ending memory page addresses are provided in a page PAGE_LIST data structure that is passed to the trusted security module via the "Reg2" input operand. The trusted security module looks up the private key associated with the confidential virtual machine identifier provided in the trusted security module call, decrypts the portion of the virtual machine state, and validates the virtual machine state portion. Tables 4-6 list the input and output operands and the completion status codes for the example TSM.CONV.VALIDATE call.

As discussed above, virtual machine state validation can comprise validating a cryptographically signed attestation report that is provided as part of the legacy virtual machine state. If attestation of the attestation report fails, the trusted security module sends the completion code indicating that attestation failed and the virtual machine monitor aborts the virtual machine conversion.

**Table 4. TSM.CONV.VALIDATE - Input Operands**

| **Operation** | **Description** | | |
|---|---|---|---|
| Reg1 | TSM.CONV.VALIDATE leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | CVM identifier | | |
| Reg3 | PAGE_LIST data structure specifying encrypted state pages to be validated | | |
| Reg4 | Portion of virtual machine state to be validated | | |
| | **Bits** | **Field** | **Description** |
| | 2:0 | State | 0 : VMCS |
| | | | 1 : Memory state |
| | | | 2 : Register state |
| | | | 3 : Attestation report |

**Table 5. TSM.CONV.VALIDATE - Output Operand**

| **Operand** | **Description** |
|---|---|
| Reg1 | TSM.CONV.VALIDATE return code |

**Table 6. TSM.CONV.VALIDATE - Completion status codes**

| **Code** | **Description** |
|---|---|
| OPEARND_INVALID | TSMCALL operand(s) invalid |
| OPERAND_BUSY | TSMCALL function indicated by leaf/version numbers is in progress |
| ATTESTATION_FAILED | Validation of virtual machine state portion failed |
| INTERRUPTED_RESUMABLE | Validation interrupted, but can be resumed |

The TSM.CONV.VMCS.IMPORT call defines an ABI for instructing a trusted security module to import an encrypted Intel^{®} Virtual Machine Control Structure state into the trusted security module-managed confidential virtual machine state structure. In other embodiments, similar trusted security module calls can be used to import an encrypted virtual processor state or virtual machine monitor state (e.g., TSM.CONV.VCPU.IMPORT or TSM.CONV.VMM.IMPORT calls), or states of other virtual machine control structures that are similar to VMCSs. In response to receiving a TSM.CONV.VMCS.IMPORT call, a trusted security module imports the supplied VMCS state into a trusted security module-managed confidential virtual machine for a given L2 partition. The TSM.CONV.VMCS.IMPORT call specifies to which L2 partition the VMCS state is to be imported. The trusted security module looks up the private key associated with the confidential virtual machine identifier provided in the trusted security module call, decrypts the pages containing the VMCS state, deserializes it, and provisions it to the specified L2 partition. Tables 7-9 list the input and output operands and the completion status codes for the example TSM.CONV.VMCS.IMPORT call.

**Table 7. TSM.CONV.VMCS.IMPORT- Input Operand Definition**

| **Operand** | **Description** | | |
|---|---|---|---|
| Reg1 | TSM.CONV.VMCS.IMPORT leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | CVM identifier and L2 index | | |
| | **Bits** | **Field** | **Description** |
| | 1:0 | L2 index | 1, 2, 3, etc. |
| | 11:2 | Reserved | |
| | 51:12 | CVM identifier | CVM Identifier |
| Reg3 | PAGE LIST data structure specifying encrypted VMCS state pages | | |

**Table 8. TSM.CONV.VMCS.IMPORT - Output Operand Definition**

| **Operand** | **Description** |
|---|---|
| Reg1 | TSM.CONV.VMCS.IMPORT return code |

**Table 9. TSM.CONV.VMCS.IMPORT - Completion status codes**

| **Code** | **Description** |
|---|---|
| OPEARND_INVALID | TSMCALL operand(s) invalid |
| OPERAND_BUSY | TSMCALL function indicated by leaf/version numbers is in progress |
| INTERRUPTED_RESUMABLE | Validation interrupted, but can be resumed |

The TSM.CONV.MEM.IMPORT call defines an ABI for instructing a trusted security module to import a virtual machine memory state into trusted security module-managed private memory for a confidential virtual machine. In response to receiving a TSM.CONV.MEM.IMPORT call, a trusted security module imports the memory pages specified in the PAGE_LIST data structure (passed to the trusted security module via the "Reg3" input operand) into private memory managed by the trusted security module and applies the page attributes specified in the ATTRIB_LIST data structure for the specified L2 partition (passed to the trusted security module via the "Reg4" input operand). The ATTRIB_LIST data structure stores physical memory address storing up to 512 64-bit entries for the memory attributes for confidential virtual machine second-level address translation (e.g., SEPT (Secure Extended Page Table (Secure EPT)) attributes (e.g., read (R), write (W), executable (X) memory page attributes) in the case of Intel^{®} TDX-enabled confidential virtual machine implementations). The trusted security module looks up the private key based on the confidential virtual machine identifier provided in the trusted security module call, decrypts the memory pages, deserializes them, and adds the pages to confidential virtual machine's private memory. The trusted security module further applies an L2 alias to the memory pages. Tables 10-12 list the input and output operands and the completion status codes for the example TSM.CONV.MEM.IMPORT call.

**Table 10. TSM.CONV.MEM.IMPORT Input Operand Definition**

| **Operand** | **Description** | | |
|---|---|---|---|
| Reg1 | TSM.CONV.MEM.IMPORT leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | CVM identifier and L2 index | | |
| | **Bits** | **Field** | **Description** |
| | 1:0 | L2 index | 1, 2, 3, etc. |
| | 11:2 | Reserved | |
| | 51:12 | CVM identifier | CVM Identifier |
| Reg3 | PAGE LIST data structure to specify encrypted memory pages | | |
| Reg4 | ATTRIB_LIST data structure to specify L2 page attributes | | |

**Table 11. TSM.CONV.MEM.IMPORT - Output Operand Definition**

| **Operand** | **Description** |
|---|---|
| Reg1 | TSM.CONV.MEM.IMPORT return code |

**Table 12. TSM.CONV.MEM.IMPORT - Completion status codes**

| **Code** | **Description** |
|---|---|
| OPEARND_INVALID | TSMCALL operand(s) invalid |
| OPERAND_BUSY | TSMCALL function indicated by leaf/version numbers is in progress |
| INTERRUPTED_RESUMABLE | Validation interrupted, but can be resumed |

The TSM.CONV.REG.IMPORT call defines an ABI for instructing a trusted security module to import register states for a confidential virtual machine. The register states imported by a trusted security module in response to this call can include general-purpose registers that are not part of a virtual processor state or virtual machine control structure for the virtual machine being converted. The registers state are imported into a specified L2 partition. The trusted security module looks up the private key for the confidential virtual machine identifier provided in the trusted security module call, decrypts the provided memory page containing the register states, deserializes it properly, and imports the register states into the specified L2 partition specified in the TSM.CONV.REG.IMPORT call. Tables 13-15 list the input and output operands and the completion status codes for the example TSM.CONV.REG.IMPORT call.

**Table 13. TSM.CONV.REG.IMPORT Input Operand Definition**

| **Operation** | **Description** | | |
|---|---|---|---|
| Reg1 | TSM.CONV.REG.IMPORT leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | Unique CVM identifier and L2 index | | |
| | **Bits** | **Field** | **Description** |
| | 1:0 | L2 index | 1, 2, 3, etc. |
| | 11:2 | Reserved | |
| | 51:12 | CVM identifier | CVM identifier |
| Reg3 | Host physical address of the page containing encrypted L2 register state | | |

**Table 14. TSM.CONV.REG.IMPORT - Output Operand Definition**

| **Operand** | **Description** |
|---|---|
| Reg1 | TSM.CONV.REG.IMPORT return code |

**Table 15. TSM.CONV.REG.IMPORT - Completion status codes**

| **Code** | **Description** |
|---|---|
| OPEARND_INVALID | TSMCALL operand(s) invalid |
| OPERAND_BUSY | TSMCALL function indicated by leaf/version numbers is in progress |
| INTERRUPTED_RESUMABLE | Validation interrupted, but can be resumed |

The TSM.CONV.END call defines an ABI for instructing a trusted security module to end a legacy virtual machine to confidential virtual machine conversion session within the trusted security module. In response to receiving a TSM.CONV.END call, the trusted security module deallocates the public-private key pair generated during a TSM.CONV.INIT call and removes its entry from the data structure storing key pair-CVM identifier associations. Tables 16-18 list the input and output operands and the completion status codes for the example TSM.CONV.END call.

**Table 16. TSM.CONV.END - Input Operands**

| **Operand** | **Description** | | |
|---|---|---|---|
| Reg1 | TSM.CONV.END leaf and version number | | |
| | **Bits** | **Field** | **Description** |
| | 15:0 | Leaf number | Selects the TSMCALL interface function |
| | 23:16 | Version number | Selects the TSMCALL interface function version |
| Reg2 | CVM identifier | | |

**Table 17. TSM.CONV.END - Output Operand**

| **Operand** | **Description** |
|---|---|
| Reg1 | TSM.CONV.END return code |

**Table 18. TSM.CONV.END - Completion status codes**

| **Code** | **Description** |
|---|---|
| OPERAND_INVALID | TSMCALL operand(s) invalid |
| OPERAND_BUSY | TSMCALL function indicated by leaf/version numbers is in progress |

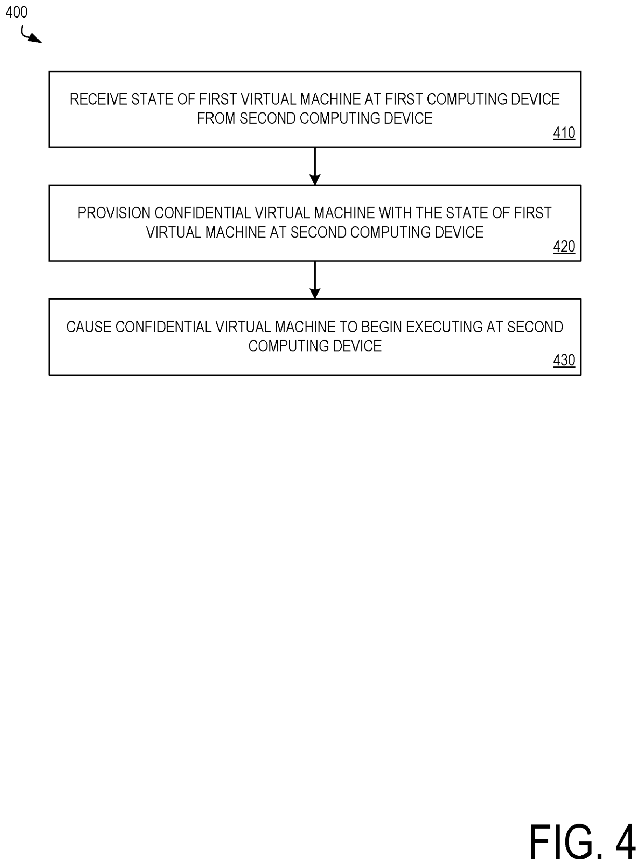

FIG. 4 illustrates a third example method of converting a legacy virtual machine to a confidential virtual machine. At stage 410 in method 400, a state of a first virtual machine is received at a first computing device from a second computing device. At stage 420, a second virtual machine is provisioned at the second computing device, wherein the second virtual machine is provisioned with the state of the first virtual machine, wherein the second virtual machine is a confidential virtual machine, wherein the second computing device having hardware-supported confidential computing capabilities. At stage 430, the second virtual machine is caused to begin executing.

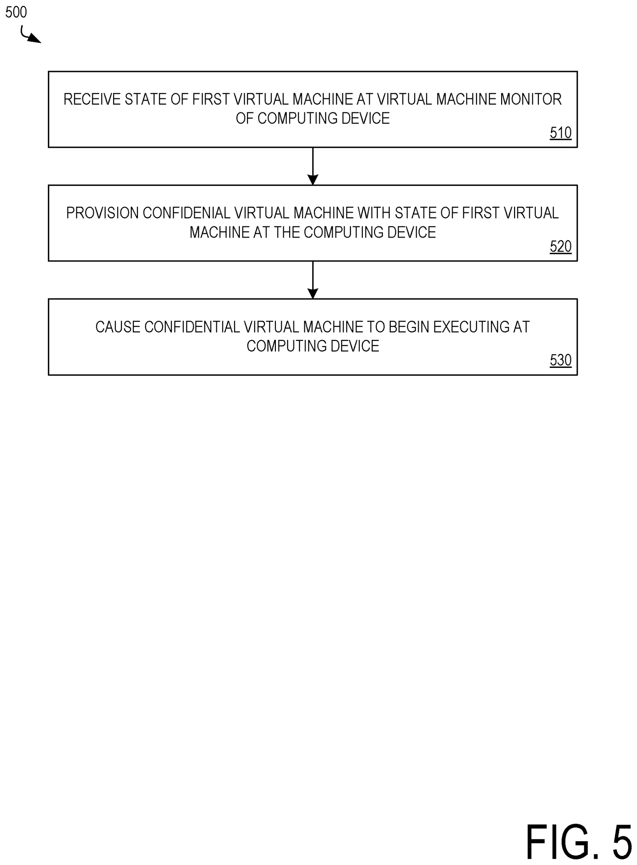

FIG. 5 illustrates a fourth example method of converting a legacy virtual machine to a confidential virtual machine. At stage 510 in the method 500, a state of a first virtual machine is received at a virtual machine monitor of a computing device, wherein the first virtual machine is not operating in a secure environment. At stage 520, a second virtual machine is provisioned, at the computing device, wherein the second virtual machine is provisioned with the state of the first virtual machine, wherein the second virtual machine is a confidential virtual machine, the computing device having hardware-supported confidential computing capabilities. At stage 530, the second virtual machine is caused to begin executing

As used herein, the term "module" refers to logic that may be implemented in a hardware component or device, software or firmware running on a processor unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processor units, state machine circuitry, and/or firmware that stores instructions executable by programmable circuitry. Modules described herein may, collectively or individually, be embodied as circuitry that forms a part of a computing system. Thus, any of the modules can be implemented as circuitry, such as trust security circuitry. A computing system referred to as being programmed to perform a method can be programmed to perform the method via software, hardware, firmware, or combinations thereof.

The technologies described herein can be performed by or implemented in any of a variety of computing systems, including mobile computing systems (e.g., smartphones, handheld computers, tablet computers, laptop computers, portable gaming consoles, 2-in-1 convertible computers, portable all-in-one computers), non-mobile computing systems (e.g., desktop computers, servers, workstations, stationary gaming consoles, rack-level computing solutions (e.g., blade, tray, or sled computing systems)), and embedded computing systems (e.g., computing systems that are part of a vehicle, smart home appliance, consumer electronics product or equipment, manufacturing equipment).

As used herein, the term "computing system" includes computing devices and includes systems comprising multiple discrete physical components. In some embodiments, the computing systems are located in a data center, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that hosts companies' applications and data), or an edge data center (e.g., a data center typically having a smaller footprint than other data center types, located close to the geographic area that it serves).

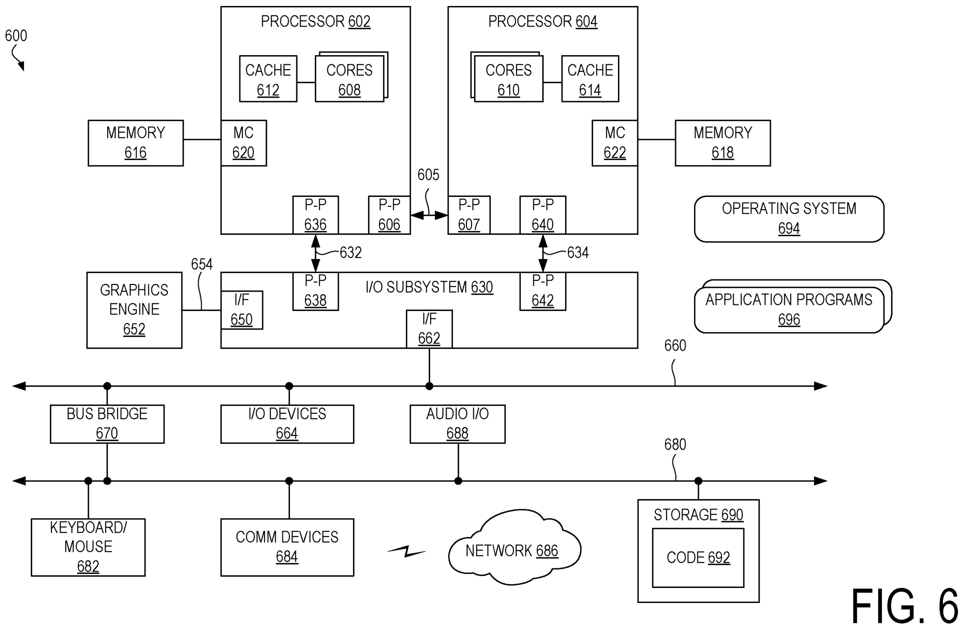

FIG. 6 is a block diagram of an example computing system in which technologies described herein may be implemented. Generally, components shown in FIG. 6 can communicate with other shown components, although not all connections are shown, for ease of illustration. The computing system 600 is a multiprocessor system comprising first processor unit 602 and second processor unit 604 comprising point-to-point (P-P) interconnects. A point-to-point (P-P) interface 606 of the first processor unit 602 is coupled to a point-to-point interface 607 of the second processor unit 604 via a point-to-point interconnection 605. It is to be understood that any or all of the point-to-point interconnects illustrated in FIG. 6 can be alternatively implemented as a multi-drop bus, and that any or all buses illustrated in FIG. 6 could be replaced by point-to-point interconnects.

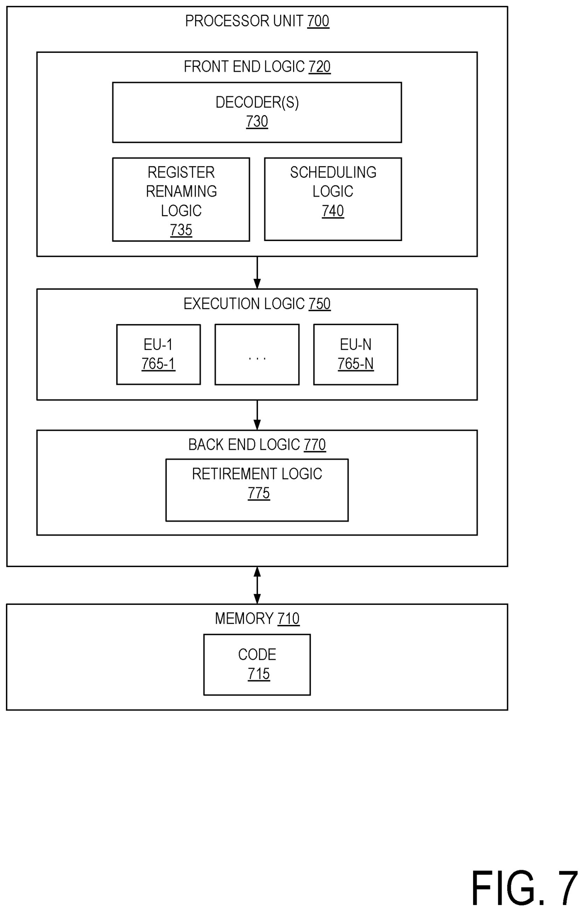

The first processor unit 602 and second processor unit 604 comprise multiple processor cores. The first processor unit 602 comprises processor cores 608 and the second processor unit 604 comprises processor cores 610. Processor cores 608 and 610 can execute computer-executable instructions in a manner similar to that discussed below in connection with FIG. 7, or other manners.

The first processor unit 602 and the second processor unit 604 further comprise cache memories 612 and 614, respectively. The cache memories 612 and 614 can store data (e.g., instructions) utilized by one or more components of the first processor unit 602 and the second processor unit 604, such as the processor cores 608 and 610. The cache memories 612 and 614 can be part of a memory hierarchy for the computing system 600. For example, the cache memories 612 can locally store data that is also stored in a first memory 616 to allow for faster access to the data by the first processor unit 602. In some embodiments, the cache memories 612 and 614 can comprise multiple cache memories that are a part of a memory hierarchy. The cache memories in the memory hierarchy can be at different cache memory levels, such as level 1 (L1), level 2 (L2), level 3 (L3), level 4 (L4), or other cache memory levels. In some embodiments, one or more levels of cache memory (e.g., L2, L3, L4) can be shared among multiple cores in a processor unit or among multiple processor units in an integrated circuit component. In some embodiments, the last level of cache memory in an integrated circuit component can be referred to as a last-level cache (LLC). One or more of the higher levels of cache levels (the smaller and faster cache memories) in the memory hierarchy can be located on the same integrated circuit die as a processor core and one or more of the lower cache levels (the larger and slower caches) can be located on one or more integrated circuit dies that are physically separate from the processor core integrated circuit dies.

As used herein, the term "integrated circuit component" refers to a packaged or unpacked integrated circuit product. A packaged integrated circuit component comprises one or more integrated circuit dies mounted on a package substrate with the integrated circuit dies and package substrate encapsulated in a casing material, such as a metal, plastic, glass, or ceramic. In one example, a packaged integrated circuit component contains one or more processor units mounted on a substrate with an exterior surface of the substrate comprising a solder ball grid array (BGA). In one example of an unpackaged integrated circuit component, a single monolithic integrated circuit die comprises solder bumps attached to contacts on the die. The solder bumps allow the die to be directly attached to a printed circuit board. An integrated circuit component can comprise one or more of any computing system component described or referenced herein or any other computing system component, such as a processor unit (e.g., system-on-a-chip (SoC), processor core, graphics processor unit (GPU), accelerator, chipset processor), I/O controller, memory, or network interface controller.

Although the computing system 600 is shown with two processor units, the computing system 600 can comprise any number of processor units. Further, a processor unit can comprise any number of processor cores. A processor unit can take various forms such as a central processing unit (CPU), graphics processing unit (GPU), general-purpose GPU (GPGPU), accelerated processing unit (APU), field-programmable gate array (FPGA), neural network processing unit (NPU), data processor unit (DPU), accelerator (e.g., graphics accelerator, digital signal processor (DSP), compression accelerator, artificial intelligence (AI) accelerator), controller, or other type of processing unit. As such, the processor unit can be referred to as an XPU (or xPU). Further, a processor unit can comprise one or more of these various types of processing units. In some embodiments, the computing system comprises one processor unit with multiple cores, and in other embodiments, the computing system comprises a single processor unit with a single core. As used herein, the terms "processor unit" and "processing unit" can refer to any processor, processor core, component, module, engine, circuitry, or any other processing element described or referenced herein.

In some embodiments, the computing system 600 can comprise one or more processor units that are heterogeneous or asymmetric to another processor unit in the computing system. There can be a variety of differences between the processing units in a system in terms of a spectrum of metrics of merit including architectural, microarchitectural, thermal, power consumption characteristics, and the like. These differences can effectively manifest themselves as asymmetry and heterogeneity among the processor units in a system.

The first processor unit 602 and the second processor unit 604 can be located in a single integrated circuit component (such as a multi-chip package (MCP) or multi-chip module (MCM)) or they can be located in separate integrated circuit components. An integrated circuit component comprising one or more processor units can comprise additional components, such as embedded DRAM, stacked high bandwidth memory (HBM), shared cache memories (e.g., L3, L4, LLC), input/output (I/O) controllers, or memory controllers. Any of the additional components can be located on the same integrated circuit die as a processor unit, or on one or more integrated circuit dies separate from any integrated circuit die containing a processor unit. In some embodiments, these separate integrated circuit dies can be referred to as "chiplets". In some embodiments, where there is heterogeneity or asymmetry among processor units in a computing system, the heterogeneity or asymmetric can be among processor units located in the same integrated circuit component. In embodiments where an integrated circuit component comprises multiple integrated circuit dies, interconnections between dies can be provided by a package substrate, one or more silicon interposers, one or more silicon bridges embedded in a package substrate (such as Intel^{®} embedded multi-die interconnect bridges (EMIBs)), or combinations thereof.

The first processor unit 602 further comprises first memory controller logic (first MC 620) and the second processor unit 604 further comprises second memory controller logic (second MC 622). As shown in FIG. 6, a first memory 616 coupled to the first processor unit 602 is controlled by the first MC 620 and a second memory 618 coupled to the second processor unit 604 is controlled by the second MC 622. The first memory 616 and the second memory 618 can comprise various types of volatile memory (e.g., dynamic random-access memory (DRAM), static random-access memory (SRAM)) and/or non-volatile memory (e.g., flash memory, chalcogenide-based phase-change non-volatile memories). The first memory 616 and the second memory 618 can comprise one or more layers of a memory hierarchy of the computing system. While first MC 620 and second MC 622 are illustrated as being integrated into the first processor unit 602 and the second processor unit 604, in alternative embodiments, memory controller logic can be external to a processor unit.

The first processor unit 602 and the second processor unit 604 are coupled to an Input/Output subsystem 630 (I/O subsystem) via point-to-point interconnections 632 and 634. The point-to-point interconnection 632 connects a point-to-point interface 636 of the first processor unit 602 with a point-to-point interface 638 of the Input/Output subsystem 630, and the point-to-point interconnection 634 connects a point-to-point interface 640 of the second processor unit 604 with a point-to-point interface 642 of the Input/Output subsystem 630. Input/Output subsystem 630 further includes an interface 650 to couple the Input/Output subsystem 630 to a graphics engine 652. The Input/Output subsystem 630 and the graphics engine 652 are coupled via a bus 654.

The Input/Output subsystem 630 is further coupled to a first bus 660 via an interface 662. The first bus 660 can be a Peripheral Component Interconnect Express (PCIe) bus or any other type of bus. Various I/O devices 664 can be coupled to the first bus 660. A bus bridge 670 can couple the first bus 660 to a second bus 680. In some embodiments, the second bus 680 can be a low pin count (LPC) bus. Various devices can be coupled to the second bus 680 including, for example, a keyboard/mouse 682, audio I/O devices 688, and a storage device 690, such as a hard disk drive, solid-state drive, or another storage device for storing computer-executable instructions (or code 692) or data . The code 692 can comprise computer-executable instructions for performing methods described herein. Additional components that can be coupled to the second bus 680 include one or more communication devices 684, which can provide for communication between the computing system 600 and one or more wired or wireless networks 686 (e.g. Wi-Fi, cellular, or satellite networks) via one or more wired or wireless communication links (e.g., wire, cable, Ethernet connection, radio-frequency (RF) channel, infrared channel, Wi-Fi channel) using one or more communication standards (e.g., IEEE 502.11 standard and its supplements).

In embodiments where the one or more communication devices 684 support wireless communication, the one or more communication devices 684 can comprise wireless communication components coupled to one or more antennas to support communication between the computing system 600 and external devices. The wireless communication components can support various wireless communication protocols and technologies such as Near Field Communication (NFC), IEEE 1002.11 (Wi-Fi) variants, WiMax, Bluetooth, Zigbee, 4G Long Term Evolution (LTE), Code Division Multiplexing Access (CDMA), Universal Mobile Telecommunication System (UMTS) and Global System for Mobile Telecommunication (GSM), and 5G broadband cellular technologies. In addition, the wireless modems can support communication with one or more cellular networks for data and voice communications within a single cellular network, between cellular networks, or between the computing system and a public switched telephone network (PSTN).

The computing system 600 can comprise removable memory such as flash memory cards (e.g., SD (Secure Digital) cards), memory sticks, Subscriber Identity Module (SIM) cards). The memory in computing system 600 (including cache memories 612 and 614, first memory 616, second memory 618, and storage device 690) can store data and/or computer-executable instructions for executing an operating system 694 and application programs 696. Example data includes web pages, text messages, images, sound files, and video to be sent to and/or received from one or more network servers or other devices by the computing system 600 via the one or more wired or wireless networks 686, or for use by the computing system 600. The computing system 600 can also have access to external memory or storage (not shown) such as external hard drives or cloud-based storage.

The operating system 694 can control the allocation and usage of the components illustrated in FIG. 6 and support the application programs 696. The application programs 696 can include common computing system applications (e.g., email applications, calendars, contact managers, web browsers, messaging applications) as well as other computing applications.

In some embodiments, a hypervisor (or virtual machine manager) operates on the operating system 694 and the application programs 696 operate within one or more virtual machines operating on the hypervisor. In these embodiments, the hypervisor is a type-2 or hosted hypervisor as it is running on the operating system 694. In other hypervisor-based embodiments, the hypervisor is a type-1 or "bare-metal" hypervisor that runs directly on the platform resources of the computing system 600 without an intervening operating system layer.

In some embodiments, the application programs 696 can operate within one or more containers. A container is a running instance of a container image, which is a package of binary images for one or more of the application programs 696 and any libraries, configuration settings, and any other information that the application programs 696 need for execution. A container image can conform to any container image format, such as Docker^{®}, Appc, or LXC container image formats. In container-based embodiments, a container runtime engine, such as Docker Engine, LXU, or an open container initiative (OCI)-compatible container runtime (e.g., Railcar, CRI-O) operates on the operating system (or virtual machine monitor) to provide an interface between the containers and the operating system 694. An orchestrator can be responsible for management of the computing system 600 and various container-related tasks such as deploying container images to the computing system 600, monitoring the performance of deployed containers, and monitoring the utilization of the resources of the computing system 600.

The computing system 600 can support various additional input devices, such as a touchscreen, microphone, camera, or touchpad, and one or more output devices, such as one or more speakers or displays. Any of the input or output devices can be internal to, external to, or removably attachable with the computing system 600. External input and output devices can communicate with the computing system 600 via wired or wireless connections.

The computing system 600 can further include at least one input/output port comprising physical connectors (e.g., USB, FireWire, Ethernet, RS-232), a power supply (e.g., battery), a global satellite navigation system (GNSS) receiver (e.g., GPS receiver); a gyroscope; an accelerometer; and/or a compass. A GNSS receiver can be coupled to a GNSS antenna. The computing system 600 can further comprise one or more additional antennas coupled to one or more additional receivers, transmitters, and/or transceivers to enable additional functions.

It is to be understood that FIG. 6 illustrates only one example computing system architecture. Computing systems based on alternative architectures can be used to implement technologies described herein. For example, instead of the first processor unit 602, the second processor unit 604, and the graphics engine 652 being located on discrete integrated circuit dies, a computing system can comprise an SoC (system-on-a-chip) integrated circuit die on which multiple processors, a graphics engine, and additional components are incorporated. Further, a computing system can connect its constituent component via bus or point-to-point configurations different from that shown in FIG. 6. Moreover, the illustrated components in FIG. 6 are not required or all-inclusive, as shown components can be removed and other components added in alternative embodiments.

FIG. 7 is a block diagram of an example processor unit to execute computer-executable instructions as part of implementing technologies described herein. The processor unit 700 can be a single-threaded core or a multithreaded core in that it may include more than one hardware thread context (or "logical processor") per processor unit.

FIG. 7 also illustrates a memory 710 coupled to the processor unit 700. The memory 710 can be any memory described herein or any other memory known to those of skill in the art. The memory 710 can store computer-executable instructions 715 (code) executable by the processor unit 700.

The processor unit comprises front-end logic 720 that receives instructions from the memory 710. An instruction can be processed by one or more decoders 730. The one or more decoders 730 can generate as its output a micro-operation such as a fixed width micro-operation in a predefined format, or generate other instructions, microinstructions, or control signals, which reflect the original code instruction. The front-end logic 720 further comprises register renaming logic 735 and scheduling logic 740, which generally allocate resources and queues operations corresponding to converting an instruction for execution.

The processor unit 700 further comprises execution logic 750, which comprises one or more execution units (EUs) (execution unit 765-1 through execution unit 765-N). Some processor unit embodiments can include a number of execution units dedicated to specific functions or sets of functions. Other embodiments can include only one execution unit or one execution unit that can perform a particular function. The execution logic 750 performs the operations specified by code instructions. After completion of execution of the operations specified by the code instructions, back-end logic 770 retires instructions using retirement logic 775. In some embodiments, the processor unit 700 allows out of order execution but requires in-order retirement of instructions. Retirement logic 775 can take a variety of forms as known to those of skill in the art (e.g., re-order buffers or the like).

The processor unit 700 is transformed during execution of instructions, at least in terms of the output generated by the one or more decoders 730, hardware registers and tables utilized by the register renaming logic 735, and any registers (not shown) modified by the execution logic 750.

Any of the disclosed methods (or a portion thereof) can be implemented as computer-executable instructions or a computer program product. Such instructions can cause a computing system or one or more processor units capable of executing computer-executable instructions to perform any of the disclosed methods. As used herein, the term "computer" refers to any computing system, device, or machine described or mentioned herein as well as any other computing system, device, or machine capable of executing instructions. Thus, the term "computer-executable instruction" refers to instructions that can be executed by any computing system, device, or machine described or mentioned herein as well as any other computing system, device, or machine capable of executing instructions.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some embodiments, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of" can mean any combination of the listed terms. For example, the phrase "one or more of A, B and C" can mean A; B; C; A and B; A and C; B and C; or A, B, and C.

As used in this application and the claims, the phrase "individual of" or "respective of' following by a list of items recited or stated as having a trait, feature, etc. means that all of the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

The disclosed methods, apparatuses, and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

The following examples pertain to additional embodiments of technologies disclosed herein.

Example 1 is a method comprising: receiving, at a first computing device from a second computing device, a state of a first virtual machine; provisioning, at the second computing device, a second virtual machine, wherein the second virtual machine is provisioned with the state of the first virtual machine, wherein the second virtual machine is a confidential virtual machine, wherein the second computing device having hardware-supported confidential computing capabilities; and causing the second virtual machine to begin executing.

Example 2 comprises the method of example 1, wherein the state of the first virtual machine is received over a secure channel in encrypted form.

Example 3 comprises the method of example 1 or 2, wherein the second computing device having hardware-supported confidential computing capabilities comprises the second computing device comprising a processor supporting an instruction pertaining to initialization of a confidential virtual machine.

Example 4 comprises the method of any one of examples 1-3, wherein the second computing device having hardware-supported confidential computing capabilities comprises the second computing device comprising a processor that limits access to a protected range of memory to instructions stored within the protected range of memory.

Example 5 comprises the method of any one of examples 1-4, wherein the second computing device having hardware-supported confidential computing capabilities comprises data accessed by the second virtual machine and instructions executed by the second virtual machine being stored in encrypted memory, wherein encryption of the data and the instructions is performed by a hardware component of the second computing device.

Example 6 comprises the method of any one of examples 1-5, wherein the state of first virtual machine comprises a virtual processor state.

Example 7 comprises the method of any one of examples 1-5, wherein the state of the first virtual machine comprises a virtual machine monitor state.

Example 8 comprises the method of any one of examples 1-5, wherein the state of first virtual machine comprises states of a plurality of registers.

Example 9 comprises the method of any one of examples 1-5, wherein the state of first virtual machine comprises a memory state.

Example 10 comprises the method of any one of examples 1-9, wherein the second computing device comprises a virtual machine monitor and a trusted security module and provisioning the second virtual machine comprises the virtual machine monitor calling the trusted security module to begin a virtual machine to confidential virtual machine conversion session.

Example 11 comprises the method of example 10, wherein provisioning the second virtual machine further comprises, in response to the trusted security module being called to begin a virtual machine to confidential virtual machine conversion session, the trusted security module generating a public-private key pair associated with the confidential virtual machine, wherein the method further comprises sending a public key of the public-private key pair to the second computing device.

Example 12 comprises the method of any one of examples 1-9, wherein the second computing device comprises a virtual machine monitor and a trusted security module and provisioning the second virtual machine comprises the virtual machine monitor calling the trusted security module to validate the state of the first virtual machine.

Example 13 comprises the method of example 12, wherein provisioning the second virtual machine further comprises, in response to the trusted security module being called to validate the state of the first virtual machine, the trusted security module: decrypting the state of the first virtual machine with a private key associated with a confidential virtual machine; and validating the state of the first virtual machine.

Example 14 comprises the method of any one of examples 1-9, wherein the second computing device comprises a virtual machine monitor and a trusted security module and provisioning the second virtual machine comprises the virtual machine monitor calling the trusted security module to import the state of the first virtual machine.

Example 15 comprises the method of example 14, wherein provisioning the second virtual machine further comprises, in response to the trusted security module being called to import the state of the first virtual machine, the trusted security module importing a virtual processor state.

Example 16 comprises the method of example 14, wherein provisioning the second virtual machine further comprises, in response to the trusted security module being called to import the state of the first virtual machine, the trusted security module importing a state of a plurality of registers.

Example 17 comprises the method of example 14, wherein provisioning the second virtual machine further comprises, in response to the trusted security module being called to import the state of the first virtual machine, the trusted security module importing a memory state.

Example 18 comprises the method of example 14, wherein provisioning the second virtual machine further comprises, in response to the trusted security module being called to import the state of the first virtual machine, the trusted security module importing a storage state.

Example 19 comprises the method of example 14, wherein provisioning the second virtual machine further comprises, in response to the trusted security module being called to import the state of the first virtual machine, the trusted security module importing a virtual machine monitor state.

Example 20 comprises the method of any one of examples 1-9, wherein the second computing device comprises a virtual machine monitor and a trusted security module, provisioning the second virtual machine comprising the virtual machine monitor calling the trusted security module to end a virtual machine to confidential virtual machine conversion session.

Example 21 comprises the method of example 20, wherein provisioning the second virtual machine further comprises, in response to the trusted security module being called to end the virtual machine to confidential virtual machine conversion session, the trusted security module deallocating a public-private key pair associated with the confidential virtual machine.

Example 22 comprises the method of any one of examples 1-21, wherein the confidential virtual machine is provisioned as a level one virtual machine monitor hosting a partitioned level two virtual machine.

Example 23 is a computing device comprising: one or more processing units; and one or more computer-readable storage media storing instructions that, when executed, cause the one or more processing units to perform the method of any one of examples 1-22, wherein the computing device is the second computing device of any one of claims 1-22.

Example 24 comprises one or more computer-readable storage media storing instructions that, when executed, cause the second computing device of any one of examples 1-22 to perform the method of any one of claims 1-22.

Example 25 is a method comprising: receiving, at a virtual machine monitor of a computing device, a state of a first virtual machine, wherein the first virtual machine is not operating in a secure environment; provisioning, at the computing device, a second virtual machine, wherein the second virtual machine is provisioned with the state of the first virtual machine, wherein the second virtual machine is a confidential virtual machine, the computing device having hardware-supported confidential computing capabilities; and causing the second virtual machine to begin executing.

Example 26 comprises the method of example 25, wherein the state of the first virtual machine is received at the virtual machine monitor in encrypted form.

Example 27 comprises the method of any example 25 or 26, wherein the computing device having hardware-supported confidential computing capabilities comprises the computing device comprising a processor supporting an instruction pertaining to initialization of a confidential virtual machine.

Example 28 comprises the method of any one of examples 25-27, wherein the computing device having hardware-supported confidential computing capabilities comprises the computing device comprising a processor that limits access to a protected range of memory to instructions stored within the protected range of memory.

Example 29 comprises the method of any one of examples 25-28, wherein the computing device having hardware-supported confidential computing capabilities comprises data accessed by the second virtual machine and instructions executed by the second virtual machine being stored in encrypted memory, wherein encryption of the data and the instructions is performed by a hardware component of the computing device.

Example 30 comprises the method of any one of examples 25-29, wherein the state of first virtual machine comprises a virtual processor state.

Example 31 comprises the method of any one of examples 25-29, wherein the state of the first virtual machine comprises a virtual machine monitor state.

Example 32 comprises the method of any one of examples 25-29, wherein the state of first virtual machine comprises states of a plurality of registers.

Example 33 comprises the method of any one of examples 25-29, wherein the state of first virtual machine comprises a memory state.

Example 34 comprises the method of any one of examples 25-33, wherein the computing device comprises a virtual machine monitor and a trusted security module and provisioning the second virtual machine comprises the virtual machine monitor calling the trusted security module to begin a virtual machine to confidential virtual machine conversion session.

Example 35 comprises the method of example 34, wherein provisioning the second virtual machine further comprises, in response to the trusted security module being called to begin a virtual machine to confidential virtual machine conversion session, the trusted security module generating a public-private key pair associated with the confidential virtual machine.

Example 36 comprises the method of any one of examples 25-33, wherein the computing device comprises a virtual machine monitor and a trusted security module and provisioning the second virtual machine comprises the virtual machine monitor calling the trusted security module to validate the state of the first virtual machine.

Example 37 comprises the method of example 36, wherein provisioning the second virtual machine further comprises, in response to the trusted security module being called to validate the state of the first virtual machine, the trusted security module: decrypting the state of the first virtual machine with a private key associated with a confidential virtual machine; and validating the state of the first virtual machine.

Example 38 comprises the method of any one of examples 25-33, wherein the computing device comprises a virtual machine monitor and a trusted security module and provisioning the second virtual machine comprises the virtual machine monitor calling the trusted security module to import the state of the first virtual machine.

Example 39 comprises the method of example 38, wherein provisioning the second virtual machine further comprises, in response to the trusted security module being called to import the state of the first virtual machine, the trusted security module importing a virtual processor state.

Example 40 comprises the method of example 38, wherein provisioning the second virtual machine further comprises, in response to the trusted security module being called to import the state of the first virtual machine, the trusted security module importing a state of a plurality of registers.

Example 41 comprises the method of example 38, wherein provisioning the second virtual machine further comprises, in response to the trusted security module being called to import the state of the first virtual machine, the trusted security module importing a memory state.

Example 42 comprises the method of example 38, wherein provisioning the second virtual machine further comprises, in response to the trusted security module being called to import the state of the first virtual machine, the trusted security module importing a storage state.

Example 43 comprises the method of example 38, wherein provisioning the second virtual machine further comprises, in response to the trusted security module being called to import the state of the first virtual machine, the trusted security module importing a virtual machine monitor state.

Example 44 comprises the method of any one of examples 25-33, wherein the computing device comprises a virtual machine monitor and a trusted security module, provisioning the second virtual machine comprising the virtual machine monitor calling the trusted security module to end a virtual machine to confidential virtual machine conversion session.

Example 45 comprises the method of example 44, wherein provisioning the second virtual machine further comprises, in response to the trusted security module being called to end the virtual machine to confidential virtual machine conversion session, the trusted security module deallocating a public-private key pair associated with the confidential virtual machine.

Example 46 comprises the method of any one of examples 25-45, wherein the confidential virtual machine is provisioned as a level one virtual machine monitor hosting a partitioned level two virtual machine.

Example 47 is a computing device comprising: one or more processing units; and one or more computer-readable storage media storing instructions that, when executed, cause the one or more processing units to perform the method of any one of examples 26-46, wherein the computing device is the computing device of any one of claims 25-46.

Example 48 comprises one or more computer-readable storage media storing instructions that, when executed, cause the computing device of any one of examples 25-46 to perform the method of any one of claims 25-46.

## Claims

1. A method comprising:
receiving, at a first computing device from a second computing device, a state of a first virtual machine;
provisioning, at the second computing device, a second virtual machine, wherein the second virtual machine is provisioned with the state of the first virtual machine, wherein the second virtual machine is a confidential virtual machine, wherein the second computing device having hardware-supported confidential computing capabilities; and
causing the second virtual machine to begin executing.

2. The method of claim 1, wherein the second computing device having hardware-supported confidential computing capabilities comprises the second computing device comprising a processor that limits access to a protected range of memory to instructions stored within the protected range of memory.

3. The method of claim 1 or 2, wherein the second computing device having hardware-supported confidential computing capabilities comprises data accessed by the second virtual machine and instructions executed by the second virtual machine being stored in encrypted memory, wherein encryption of the data and the instructions is performed by a hardware component of the second computing device.

4. The method of any one of claims 1-3, wherein the state of first virtual machine comprises a virtual processor state.

5. The method of any one of claims 1-3, wherein the state of the first virtual machine comprises a virtual machine monitor state.

6. The method of any one of claims 1-5, wherein the second computing device comprises a virtual machine monitor and a trusted security module and provisioning the second virtual machine comprises the virtual machine monitor calling the trusted security module to validate the state of the first virtual machine.

7. The method of any one of claims 1-6, wherein the second computing device comprises a virtual machine monitor and a trusted security module and provisioning the second virtual machine comprises the virtual machine monitor calling the trusted security module to import the state of the first virtual machine.

8. The method of claim 7, wherein provisioning the second virtual machine further comprises, in response to the trusted security module being called to import the state of the first virtual machine, the trusted security module importing a virtual processor state.

9. The method of claim 7, wherein provisioning the second virtual machine further comprises, in response to the trusted security module being called to import the state of the first virtual machine, the trusted security module importing a state of a plurality of registers.

10. The method of claim 7, wherein provisioning the second virtual machine further comprises, in response to the trusted security module being called to import the state of the first virtual machine, the trusted security module importing a memory state.

11. The method of claim 7, wherein provisioning the second virtual machine further comprises, in response to the trusted security module being called to import the state of the first virtual machine, the trusted security module importing a storage state.

12. The method of claim 7, wherein provisioning the second virtual machine further comprises, in response to the trusted security module being called to import the state of the first virtual machine, the trusted security module importing a virtual machine monitor state.

13. The method of any one of claims 1-12, wherein the confidential virtual machine is provisioned as a level one virtual machine monitor hosting a partitioned level two virtual machine.

14. A computing device comprising:
one or more processing units; and
one or more computer-readable storage media storing instructions that, when executed, cause the one or more processing units to perform the method of any one of claims 1-13, wherein the computing device is the second computing device of any one of claims 1-13.

15. One or more computer-readable storage media storing instructions that, when executed, cause the second computing device of any one of claims 1-13 to perform the method of any one of claims 1-13.
